Europäisches Patentamt

European Patent Office

Office européen des brevets

(19)

(11) **EP 1 586 883 A1**

(12) **EUROPEAN PATENT APPLICATION**
published in accordance with Art. 158(3) EPC

(43) Date of publication:
**19.10.2005 Bulletin 2005/42**

(21) Application number: **03812285.9**

(22) Date of filing: **10.11.2003**

(51) Int Cl.7: **G01M 1/08**, G01M 1/16, G01M 13/04

(86) International application number:
**PCT/JP2003/014236**

(87) International publication number:
**WO 2004/051209 (17.06.2004 Gazette 2004/25)**

(84) Designated Contracting States:
**AT BE BG CH CY CZ DE DK EE ES FI FR GB GR HU IE IT LI LU MC NL PT RO SE SI SK TR**

(30) Priority: **29.11.2002 JP 2002382751**

(71) Applicant: **Tsuji, Katsumi**
**Setagaya-ku, Tokyo 157-0072 (JP)**

(72) Inventor: **Tsuji, Katsumi**
**Setagaya-ku, Tokyo 157-0072 (JP)**

(74) Representative: **Iemenschot, Johannes Andreas**
**Exter Polak & Charlouis B.V.,**
**P.O. Box 3241**
**2280 GE Rijswijk (NL)**

(54) **DYNAMIC UNBALANCE CALCULATING METHOD AND DYNAMIC UNBALANCE TESTING DEVICE**

(57)  The magnitudes and angular positions of dynamic unbalance in rotor are determined by the calculating method of this invention from the original vibration vectors. The original vibration vectors (magnitude and angular position) obtained by measurements using a vibration sensor at bearings supporting the rotor has its specific unbalance calculated from the dynamic unbalance vectors (magnitude, angular position) in the rotor obtained by the vector calculation method on the basis of the ratios of the distances between the bearings to the distance between the two correction planes chosen arbitrarily in the rotor.

Fig.2

**Description**

**Field of Application :**

This invention relates to a calculating method to determine the dynamic unbalance vectors in rotors.

**Prior Art :**

Up to this time, the calculating method to determine the dynamic unbalance in rotor of rotating machines is as follows:
The original vibration vectors (displacement,velocity, or acceleration) are measured at bearings effected by the centrifugal force due to unknown dynamic unbalance in the rotor. Then the machine is stopped and a trial mass is attached on the rotor. Subsequently the machine is ran and the vibration vectors changed by the trial mass are measured. These test runs with trial mass are necessary to repeat at several times. Using the measured quantities, the dynamic unbalance in the rotor can be determined by the calculating with conversion coefficient method and such.

**Abstract of the disclosure:**

The object of this invention is to eliminate the burdens which the ordinal method needs several times stops to run, disassemblings, attachings with trial mass, reassemblings,retest runs and measurings to detect the changed vibration vectors, and to produce the calculating method to determine the dynamic unbalance in rotor from only the original vibration vectors measured under the initial operating condition without a trial mass.
The feature of this invention is to calculate the dynamic unbalance vectors (magnitudes and directions) in rotor,by the geometric-vector-calculation using the ratios for distance lengths between bearings and the distance length between the correction planes, on the view point of this invention that the vector quantities (displacement,velocity, or acceleration) measured at both bearings under the initial operating condition, corresponding to the centrifugal forces due to the dynamic unbalance of rotor represented at the portions of journals .

**Brief description of the drawings :**

Fig.1 shows a image drawing for the example of carrying out the invention.
Fig.2 shows a example of carrying out the invention by the vector calculation in case of $a_1 = a_2$.
Fig.3 shows a image drawing for example of carrying out the invention by the vector calculation in case of $a_1 \neq a_2$.
Fig.4 shows a example of carrying out the invention by the vector-computationin case of $a_1 \neq a_2$.

Description of the marks:

$a_1, a_2$ :  Length between the correction planes and bearings.
b :  Length between the correction planes.
$l_1, l_2$ :  Length between the center of gravity and bearings.
$B_1, B_2$ :  Bearings supporting the journals of rotating shaft.
L :  Length between the bearings
R :  Main portion of rotor
G :  Gravity-center of rotor
I , II :  Correction planes (dynamic balance planes)
X :  X -coordinate,basis of angle for rotor
Y :  Y-coordinate
Z :  Z -coordinate,center of rotating axis (main shaft)

**Best Mode of carrying out the invention:**

Followings are the descriptions of a best mode of carrying out the invention taken in connection with the accompanying drawings .

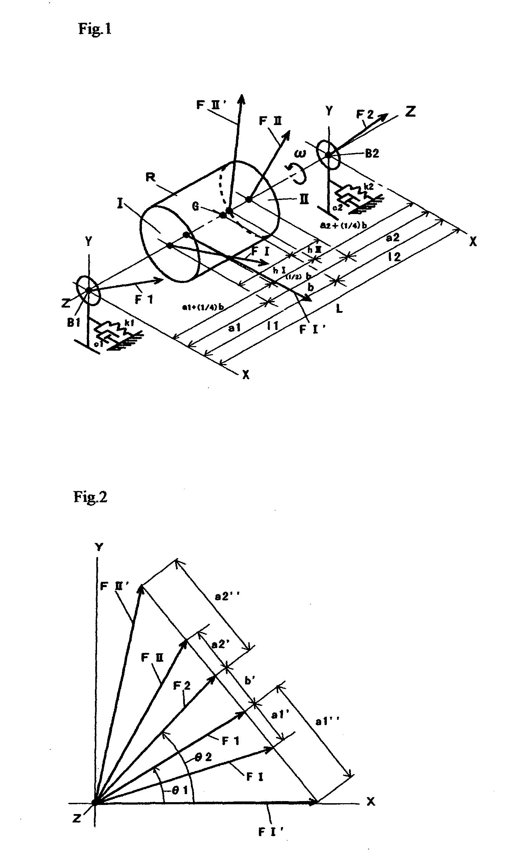

1. Fig.1(a three-dimensional drawing) shows a model for the state of that the most general rotor,R, of the rotating machines supported in level by the bearings B1,B2, to be applied the invention.

The unbalance centrifugal forces caused by the dynamic unbalance in rotor, transfer to the bearings B1,B2 through the journals of the main shaft (z-coordinate) and the vibrations can be produced on the bearings B1,B2.

For the vibrations on the bearings, the vibration vector quantities (magnitude & direction for displacement, velocity, or acceleration) measured in X-coordinate are $X_1, X_2$.

In case of that the vibration vectors are the amplitudes of displacements $X_1$, $X_2$ [cm], the equation of motion for the forced vibrations of the centrifugal forces, $F_1$, $F_2$ acting to the bearings $B_1, B_2$ which due to the unbalance in rotor, can be expressed by the following differential equation::

$$M_{1,2} \frac{d^2 x_{1,2}}{dt^2} + c_{1,2} \frac{dx_{1,2}}{dt} + k_{1,2} x_{1,2} = F_{1,2} \cos \omega t \qquad [N] \qquad\qquad 1\text{-}1$$

where, $M_{1,2}$: inertia mass acting to the bearings B1,B2, [Ns$^2$/cm] provided that,

$$M_1 = M \frac{l_2}{L}, \; M_2 = M \frac{l_1}{L} \qquad [Ns^2/cm] \qquad\qquad 1\text{-}2$$

M : mass of rotor      [Ns$^2$/cm]
$C_{1,2}$ : viscous damping coefficient of the bearings B1,B2 [N·s/cm]
$k_{1,2}$ : stiffness of the bearings B1,B2 in x-coordinate [N/cm]

$$k_{1,2} = (\omega n_1, n_2)^2 M_{1,2} \qquad [N/cm] \qquad\qquad 1\text{-}3$$

$\omega n_1, n_2$ : natural frequencies of the bearings B1,B2 in x-coordinate [rad/s]
      $\omega$ : angular velocity of rotor [rad/s]
      t : time      [s]

The magnitudes of the unbalance centrifugal forces $F_1$, $F_2$ in rotor can be obtained by the following equation based on the solution of the Eq. 1-1

$$F_i = k_i x_i \sqrt{[1 - (\omega/\omega_{ni})^2]^2 + [2(c_i/c_{oi})(\omega/\omega_{ni})]^2} \qquad [N] \qquad\qquad 1\text{-}4$$

where, i : 1, 2, to be continued followings
      $C_{ci}$: critical damping coefficient of the bearings B1,B2 in x-coordinate      [N·s/cm]

2. As the alternate solution for the magnitudes of the unbalance centrifugal forces $F_1$, $F_2$, the unbalances distributing in the rotor can be represented at the intensive and arbitrary two planes (defined as correction planes or dynamic balance planes) being vertical to the rotationally axis (main shaft), and on the view-point of this invention that "the unbalance centrifugal forces in rotor acting to the both bearings, are equivalent to the unbalance centrifugal forces caused in the dynamic balance planes of the both portions of the journals",because of the journals of rotor supported by the bearings are also to belong to the portion of rotor, so the magnitude [N] of the unbalance centrifugal forces $F_1$, $F_2$ can be expressed by the following equation

$$F_{1,2} = M_{1,2} e_{1,2} \omega^2 \qquad [N] \qquad\qquad 2\text{-}1$$

where, $e_{1,2}$ : specific unbalances at the bearing B1,B2 (journals) planes [cm]
3. The amount of specific unbalance, $e_{1,2}$ , can be obtained by the following equation of motion which the Eq.2-1 is substituted in Eq.1-1

$$M_{1,2} \frac{d^2 x_{1,2}}{dt^2} + c_{1,2} \frac{dx_{1,2}}{dt} + k_{1,2} x_{1,2} = M_{1,2} e_{1,2} \omega^2 \cos \omega t \qquad [N] \qquad\qquad 3\text{-}1$$

Based on the solution of Eq.3-1, the amount of specific unbalance, $e_{1,2}$, can be obtained by the following equation

$$e_i = x_i \frac{\sqrt{[1-(\omega/\omega_{ni})^2]^2 + [2(c_i/c_{oi})(\omega/\omega_{ni})]^2}}{(\omega/\omega_{ni})^2} \quad [\text{cm}] \qquad 3\text{-}2$$

4. The direction of vector $F_1$, $F_2$, namely the angular position $\theta 1$, $\theta 2$ to the X-coordinate (basis) can be obtained by that the phase angles: $\alpha i$ are revised to the measured angular positions of the vibration vectors $X_1$, $X_2$ (displacement) for the $F_1$,$F_2$ (force) [N].
$\alpha i$ are expressed by the following equation

$$\alpha_i = \tan^{-1} \frac{2(\omega/\omega_{ni})(c_i/c_{oi})}{1-(\omega/\omega_{ni})^2} \quad [\text{rad}] \qquad 4\text{-}1$$

5. Determining the dynamic unbalance of the section,b, of rotor R based on the quantities of the unbalance centrifugal force vector $F_1$, $F_2$ (magnitude, direction) at the bearings B1,B2 (journal portions) obtained by Eq.1-4 or Eq.2-1, can be calculated as following descriptions based on the view point of the feature of the invention that it is similar to move or change the arbitrary dynamic balance planes.
Where, the both sides of the section,b, of rotor R are two correction planes I, II (this means that the length between the correction planes I and II is ,b,) And,let the lengths between the both correction planes and the both bearings B1,B2 are $a_1$ and $a_2$ [cm],namely

$$\text{Ratio of distances between bearings and correction-planes} = a_1 : b : a_2 \quad [\text{cm}] \qquad 5\text{-}1$$

6. In case of $a = a_2$ and $F_1 \doteqdot F_2$ :
(the surface of Fig. 2 means that X-coordinate and Y-coordinate are crossing on the face, and Z-coordinate is perpendicular to the surface of Fig. 2)
The magnitudes of vectors $F_1$, $F_2$ [N] obtained by Eq.1-4 or2-1, 3-2, are converted to the arbitrary lengths and drew on Fig.2.
And the length of straight line which is connected between the tips of arrows of vectors $F_1$, $F_2$ on Fig.2, is drew as b ' , then the line b ' are extended to the both outside as the $a_1$' of $F_1$ side and $a_2$' of $F_2$ side, and the ratio of lengths of 3-line shall be set as equal to the ratio of distances between the bearings-correction-planes of Eq.5-1.
Namely,

$$a_1' : b' : a_2' = a_1 : b : a_2 \quad [\text{cm}] \qquad 6\text{-}1$$

7. Next on the Fig.2, the lines $F_I$, $F_{II}$ n are drew by connecting with between the each tips of lines $a_1$' , $a_2$' and the center of rotational axis Z ,.are obtained as the dynamic unbalance vectors (N, rad) of correction planes I , II in rotor that corresponding to $F_1$, $F_2$ (dynamic unbalance centrifugal forces) vectors (N,rad)
8. The magnitudes [N] of dynamic unbalance centrifugal force vectors $F_I$, $F_{II}$ can be obtained by the following equation based on the ratio of arbitrary unit length on the Fig.2

$$F_{I, II} = F_{1, 2} \frac{\text{length of vector } F_{I, II}}{\text{length of vector } F_{1,2}} \quad [\text{N}] \qquad 8\text{-}1$$

9. The amount of specific unbalance, $e_{I,II}$ [cm] corresponding to the dynamic unbalances $F_I$, $F_{II}$ [N] are can be obtained by that the result of Eq.8-1 is substituted in the following equation

$$e_I = \frac{F_I}{M_I \omega^2} , \quad e_{II} = \frac{F_{II}}{M_{II} \omega^2} \quad [\text{cm}] \qquad 9\text{-}1, 9\text{-}2$$

Where,

$$M_I, M_{II} : M_I \frac{h_{II}}{b} M, M_{II} = \frac{h_I}{b} M \qquad [NS^2/cm] \qquad \qquad 9\text{-}3,9\text{-}4$$

10. Dynamic unbalance in the case of change for the distance ,b, between two correction planes I , II in the rotor on Fig. 1, (which will be changed to half distance 1/2b) ,on Fig.2, the length: b ' is not changed, the line at $F_1$ side will be extended as $a_1$" and also the line at $F_2$ side will be extended as $a_2$". As result, the ratio of the three changed lines shall be satisfied within the ratio of following equation.
Namely,

$$a_1\text{": } b \text{ ' : } a_2\text{"} = (a_1 + (1/4) b) : (1/2) b : (a_2 + (1/4) b) \qquad \qquad 10\text{-}1$$

11. Then, on Fig.2, the each tips of the lines $a_1$", $a_2$" and the center of rotational axis,Z are connected, and the lines $F_I$', $F_{II}$' can be produced.
   The lines $F_I$', $F_{II}$' are obtained as the dynamic unbalance vectors (ratio of magnitude, angle position) corresponding to $F_1$, $F_2$ (unbalance centrifugal forces) [N,rad] at the correction planes I , II , in case of the distance between 2-correction planes in rotor has been changed to 1/2 of ,b,.
12. The amounts of specific unbalance of dynamic unbalance , $e_I$', $e_{II}$' [cm] in case of the distance: 1/2b between the 2-correction planes ,which can be obtained by the simulating calculation in accordance with Eqs.8-1,9-1,and 9-2.
13. In case of $a_1 \ne a_2$ :

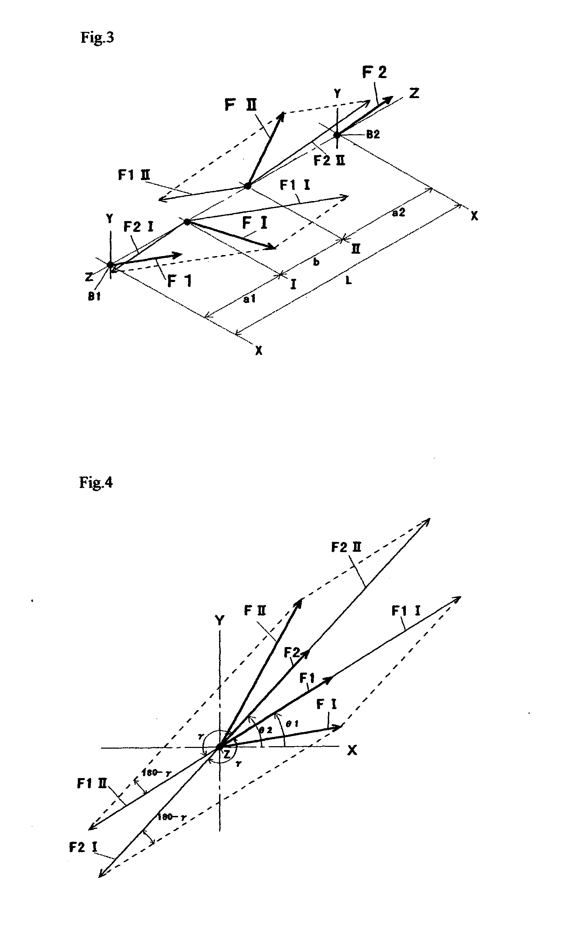

   The calculation to determine the dynamic unbalance can be performed that the dynamic unbalance vectors: $F_I$, $F_{II}$ [N] obtained by above Par. 6~9 (in case of $a_1 = a_2$) are distributed to the designed correction planes in accordance with the conventional method of statics, and the dynamic unbalance vectors of the each designed plane can be determined by the geometric re-addition of these distributed vectors.
   And in case of the directly calculating to determine the dynamic unbalance from the unbalance centrifugal forces vectors $F_1$, $F_2$ [N],based on the view-point "the planes of both journals (bearings) are also equal to dynamic balance plane in rotor", the dynamic unbalance vectors $F_I$ , $F_{II}$ [N] of rotor can be determined in following Pars. by the vector-geometric-calculation using principles of statics as showing in Fig.3 (three-dimensional drawing) and Fig.4.

14. At first,as showing Fig.3 (three-dimensional drawing),the original magnituude $F_1$, $F_2$ [N] are distributed to the designed dynamic balance plane (correction planes) I , II by the following equation.
And the magnitudes of component vectors can be obtained.
component vectors on $F_1$ plane:

$$F_{1I} = F_1 \frac{a_1+b}{b}, \; F_{2I} = F_{2II} \frac{a_2}{b+a_2} \qquad [N] \qquad \qquad 14\text{-}1,14\text{-}2$$

   component vectors on $F_{II}$ plane:

$$F_{1II} = F_{1I} \frac{a_1}{a_1+b}, \; F_{2II} = F_2 \frac{b+a_2}{b} \qquad [N] \qquad \qquad 14\text{-}3,14\text{-}4$$

15. Next, the resultant vector $F_I$ from the component vectors of Eqs.14-1,2 and the resultant vector $F_{II}$ from the component vectors of Eqs. 14-3,4 are showed on Fig.4 as the dynamic unbalance vectors of the dynamic balance planes I , II, namely, the dynamic unbalance vectors $F_I$, $F_{II}$ of the dynamic balance planes I , II can be obtained by the vector-calculation based on "parallelogram law" showed in Fig.4 or the following equations according to the formulas of "triangle of force". Namely,

$$F_I=\sqrt{F_{1I}{}^2+F_{2I}{}^2-2F_{1I}F_{2I}COS(180-\gamma)} \qquad [N] \qquad\qquad 15\text{-}1$$

$$F_{II}=\sqrt{F_{1II}{}^2+F_{2II}{}^2-2F_{1II}F_{2II}COS(180-\gamma)} \qquad [N] \qquad\qquad 15\text{-}2$$

provided that,

$$\gamma=(\theta_1+180)-\theta_2 \qquad [deg] \qquad\qquad 15\text{-}3$$

16. The amounts of specific unbalance $e_I$, $e_{II}$ [cm] corresponding to the dynamic unbalance centrifugal force $F_I$, $F_{II}$ [N] determined in the above Par. 15, which can be obtained by simulating in accordance with Eqs.8-1,9-1,and 9-2. Showing in the above descriptions of "Best mode of carrying out the invention", the calculation procedures with the equations and geometric calculations with vector in Figs.2 and 4, which are the features of this invention. And the numeric calculation used with the trigonometrical function and the sine and cosine law of trigonometry that simulated with the geometric calculations with vector in Figs.2 and 4, which are also valid in this invention. And these calculation mode can be applied the vectors measured for the velocity and acceleration and for the computer of field balancing and dynamic balancing machines, which are also valid in this invention.

**Industrial applicability :**

This invention can directly calculate to determine the dynamic unbalance of rotating machine from the original vibration vectors detected at the bearings. Therefor the test runs which are subject to detect the changes effected with the trial masses in field balancing, they are unnecessary, so the dynamc balancing works can be simplified and reduced in measuring time.
The merits due to reduction increase according to the more larger size rotor. And this invention makes easily to correct the unbalance,to test balancing and to monitor for the unbalance vibration in the areas of the chemical plants,nuclear power plants and such plants using dangerous objects, and to contribute for the safety. On the dynamic balancing test at the shop of rotating machinery, the application of this invention makes to reduce the measuring times and to simplify the methods and procedures for measuring, and to be valid to reduce for burdens of the powers,labors, and equipments.

**Claims**

1. The calculating method to determine the dynamic unbalance in rotors by the vector calculation which is using with the ratios between the distance lengths of bearings of machines and apparatus and the ratios of the distance length of arbitrarily chosen two correction planes without the test runs attached with trial masses,based on the data consist of magnitudes and directions for the vibration vector quantities of displacement, velocity, or acceleration which originated in dynamic unbalance in rotor, and which are measured at the two bearings of the rotating machines or dynamic balancing machines

2. The computers,measuring instruments and testing facilities, which are directly or indirectly applied or equipped the calculating method to determine the dynamic unbalance in rotor with the vector calculation mentioned in the claim 1.

Fig.1

Fig.2

Fig.3

Fig.4

## INTERNATIONAL SEARCH REPORT

| International application No. |
|---|
| PCT/JP03/14236 |

**A. CLASSIFICATION OF SUBJECT MATTER**
Int.Cl$^7$ G01M1/08, G01M1/16, G01M13/04

According to International Patent Classification (IPC) or to both national classification and IPC

**B. FIELDS SEARCHED**

Minimum documentation searched (classification system followed by classification symbols)
Int.Cl$^7$ G01M1/08, G01M1/16, G01M13/04

Documentation searched other than minimum documentation to the extent that such documents are included in the fields searched
| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-221096 A (Daiwa Seiko Kabushiki Kaisha), 11 August, 2000 (11.08.00), Full text; all drawings (Family: none) | 1-2 |
| A | JP 2001-141594 A (Shimadzu Corp.), 25 May, 2001 (25.05.01), Par. No. [0019] (Family: none) | 1-2 |
| A | JP 1-142429 A (Shimadzu Corp.), 05 June, 1989 (05.06.89), Full text; all drawings (Family: none) | 1-2 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 February, 2004 (04.02.04) | 24 February, 2004 (24.02.04) |

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

| International application No. |
| --- |
| PCT/JP03/14236 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 63-286734 A (Carl Schenck AG.),<br>24 November, 1998 (24.11.98),<br>Full text; all drawings<br>& DE 3715499 A      & US 4891981 A<br>& EP 290867 A2 | 1-2 |

Form PCT/ISA/210 (continuation of second sheet) (July 1998)